# EUROPEAN PATENT APPLICATION

(11) **EP 4 475 534 A1**
(43) Date of publication of application: **11.12.2024**
(21) Application number: 23177767.3
(22) Date of filing: 06.06.2023
(51) Int. Cl.: H04N 21/43, H04N 21/431, H04N 21/44, H04N 21/472

(54) **METHOD OF DISPLAYING MULTIMEDIA CONTENT RELATED TO A LOCATION APPEARING IN A VIDEO**

(71) Applicant: Top Victory Investments Limited, Kwun Tong, Kowloon 999077 (HK)
(72) Inventor: JAIN, Vikas, 560045 Bangalore (IN)
(74) Representative: EIP

(57) **Abstract**

A method of displaying multimedia content related to a location appearing in a video includes generating, based on the main video, a geolocation file that records timestamps and corresponding locations related to the main video, scanning through multimedia files to find one file from among the multimedia files that has metadata corresponding to the geolocation file and making the file serve as a matched file, associating the matched file with the main video by generating an association file for the main video, playing the main video, displaying a thumbnail of the matched file, and displaying the matched file when the thumbnail is selected.

## Description

The disclosure relates to a method of displaying multimedia content, and more particularly to a method of displaying multimedia content related to a location appearing in a video as the video is being played.

When watching a video, when a landmark appears in the video, a user may wonder whether he or she has ever visited the landmark, and whether there are personal images or videos related to the landmark. While information of geographic locations for different scenes in a video are typically not stored in the video file, some online video platforms do reveal the place (e.g., which city) where the video was recorded. However, information on the geographic locations of the various scenes or landmarks appearing in individual frames of the video is still lacking.

Therefore, an object of the disclosure is to provide a method of displaying multimedia content related to a location appearing in a video, so that a personal picture or video containing a landmark once visited can be shown to family members, friends or guests on a screen while the same landmark is shown in a movie currently being watched.

According to an aspect of the disclosure, there is provided a method of displaying multimedia content related to a location appearing in a video according to claim 1.

Other features and advantages of the disclosure will become apparent in the following detailed description of the embodiment(s) with reference to the accompanying drawings. It is noted that various features may not be drawn to scale.
Figure 1 is a block diagram illustrating an embodiment of an electronic system according to the disclosure.
Figure 2 is a flow chart illustrating an embodiment of a method of displaying multimedia content related to a location appearing in a video according to the disclosure.
Figure 3 is a flow chart illustrating steps of a landmark detection process.
Figure 4 is a schematic diagram illustrating an example of a key frame of a main video.
Figure 5 is a schematic diagram illustrating four personal images as examples of matched files.
Figure 6 illustrates thumbnails of four exemplary matched files being displayed along with the main video.

Before the disclosure is described in greater detail, it should be noted that where considered appropriate, reference numerals or terminal portions of reference numerals have been repeated among the figures to indicate corresponding or analogous elements, which may optionally have similar characteristics.

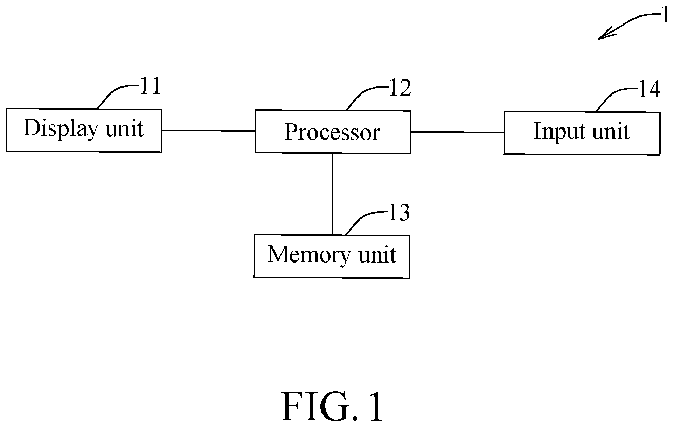

Referring to Figure 1, an electronic system 1 that is adapted to display, while playing a video, multimedia content related to a location appearing in the video according to an embodiment of the disclosure is illustrated. The electronic system 1 includes a display unit 11, a processor 12, a memory unit 13 and an input unit 14. The display unit 11, the memory unit 13 and the input unit 14 are electrically connected to the processor 12. In some embodiments, the display unit 11 is implemented by a liquid crystal display (LCD), a light-emitting diode (LED) display, an electronic visual display, a screen, a television, a computer monitor, a mobile display, a digital signage, a video wall, or the like; the processor 12 is implemented by a central processing unit (CPU), a microprocessor, a mobile processor, a micro control unit (MCU), a digital signal processor (DSP), a field-programmable gate array (FPGA), or any circuit configurable/programmable in a software manner and/or hardware manner to implement functionalities described in this disclosure; the memory unit 13 is implemented by flash memory, a hard disk drive (HDD), a solid state disk (SSD), an electrically-erasable programmable read-only memory (EEPROM) or any other non-volatile memory devices; and the input unit 14 is implemented by a physical button set or a touch panel that can be combined with the display unit 11 to form a touchscreen. In some embodiments, the electronic system 1 is implemented by a personal computer, a notebook computer, a smartphone, a media server used in a household scenario, a data server, a cloud server or combinations thereof. In some embodiments, the memory unit 13 includes a storage medium installed in a home media server that is connected to the processor 12 via a local area network (LAN) cable or wireless LAN. In some embodiments, the memory unit 13 includes a personal storage space in a cloud server that is accessible to the processor 12 via the Internet. However, implementations of the electronic system 1 and components included therein are not limited to the disclosure herein, and may be changed in other embodiments.

The memory unit 13 is configured to store a video (referred to as a main video hereinafter) that is to be played on the electronic system 1. In some embodiments, the main video is exemplified by a movie and includes a sequence of video frames that respectively correspond to different timestamps. In some embodiments, the video frames are composed of intra-coded pictures (I-frames) that are complete pictures, predicted pictures (P-frames) that each store a difference between a current frame and a previous frame, and bidirectional predicted pictures (B-frames) that each store a difference between a current frame and a previous frame and a difference between the current frame and a forward frame. The memory unit 13 is further configured to store multimedia files that include personal images and personal videos of a user. In some embodiments, the personal images and personal videos may be personal photographs and videos that were recorded when the user and/or his/her family members went traveling, visiting landmarks, sightseeing spots, tourist attractions, etc. In some embodiments, the personal images and personal videos may contain images of scenes or landmarks only, and may not contain images of any person.

The processor 12 is configured to detect a landmark in the main video, to detect landmarks in the multimedia files, to scan through the multimedia files to determine, if any, a matched file that is one of the personal images and the personal videos which contains a landmark matching the landmark detected in the main video, and to associate the matched file with the main video. The processor 12 is further configured to control the display unit 11 to play the main video, and to control the display unit 11 to display the matched file when the landmark is shown in the main video during playback of the main video.

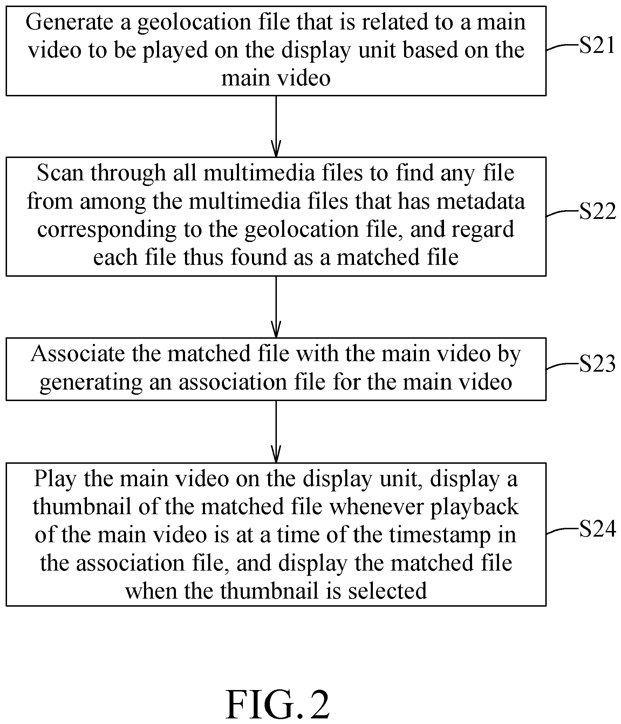

Referring to Figure 2, a method of displaying, while playing a video, multimedia content related to a location appearing in the video according to an embodiment of the disclosure is illustrated. The method is adapted to be performed by the electronic system 1 shown in Figure 1. The method includes the following steps S21 to S24.

In step S21, the processor 12 generates a geolocation file that is related to a main video to be played on the display unit 11 based on the main video, and stores the geolocation file in the memory unit 13. In some embodiments, when the main video was recorded using a smartphone or a camera that is provided with a global navigation satellite system (such as Global Positioning System, GPS), metadata of the main video would store a piece of geolocation information related to a location where the main video was recorded. It is noted that a landmark at the location where the main video was recorded may be captured as a background in the main video. The metadata of the main video may be stored by following the Exchangeable image file format (Exif) standard. Moreover, when the main video was recorded at different locations so that the main video includes different video parts respectively corresponding to the different locations, the metadata may store plural pieces of geolocation information each corresponding to a respective one of the different video parts, and each indicating a timestamp of the video part in the main video and a location where the video part was recorded. In this scenario, the processor 12 extracts the plural pieces of geolocation information from the metadata of the main video by using a software program, such as Exiftool, and generates the geolocation file that records the timestamps and the locations indicated by the plural pieces of geolocation information. In some embodiments, the geolocation file may be generated in GPS Exchange Format (GPX).

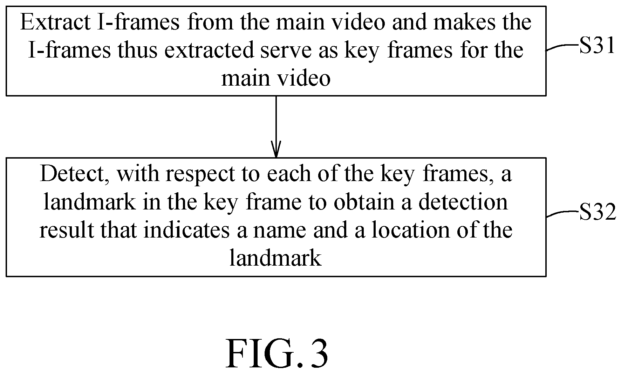

Alternatively, in some embodiments, when the main video was recorded using a video recorder or a camera that is not provided with a global navigation satellite system, metadata of the main video would not store any geolocation information related to a location where the main video was recorded. In some embodiments, a social media platform that hosts the main video may remove geolocation information related to the main video that is originally stored in the metadata, so that information related to the location where the main video was recorded would become unavailable. In these scenarios, the processor 12 determines landmarks appearing in the main video by performing a landmark detection process on the main video, and generates the geolocation file based on a result of the landmark detection process. Specifically, the landmark detection process includes steps S31 to S32 shown in Figure 3.

In step S31, the processor 12 extracts the I-frames from the main video and makes the I-frames thus extracted serve as key frames for the main video. In some embodiments, the processor 12 executes a video processing software program, such as FFmpeg tool, to obtain the key frames. In some embodiments, if the I-frames exhibit too much information redundancy, the processor 12 may further reduce a number of the I-frames thus extracted by selecting scene-changing frames from among the I-frames using a scene filter, and make the scene-changing frames thus selected serve as the key frames. It is noted that the key frames correspond to their respective timestamps.

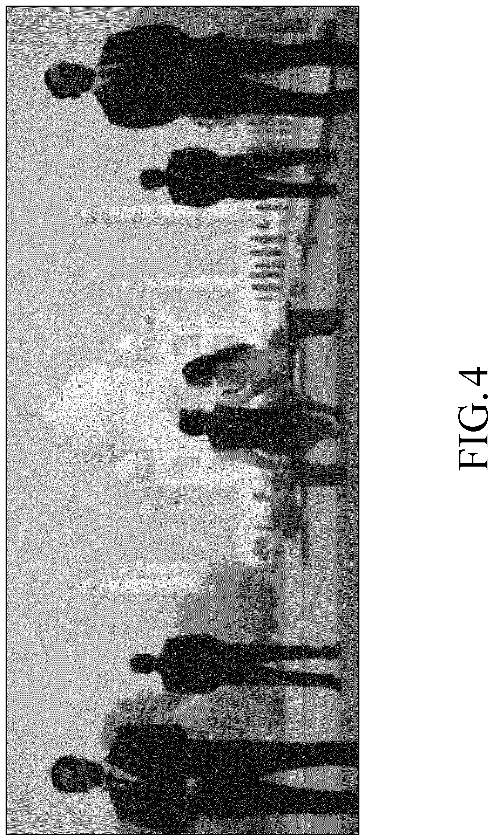

In step S32, with respect to each of the key frames, the processor 12 detects, if any, a landmark in the key frame to obtain a detection result that indicates a name of the landmark and a location of the landmark represented in a set of longitude and latitude coordinates. In some embodiments, the processor 12 detects the landmarks in the key frames by using an image feature detection tool provided by a cloud computing service, such as Google Cloud Vision application programming interface (API). Referring to Figure 4, an example of a key frame of the main video presents a movie scene having Taj Mahal as a landmark in the background. In this case, the processor 12 detects a landmark in the key frame as Taj Mahal and obtains the location of Taj Mahal.

In this way, the processor 12 generates the geolocation file that records the timestamps of the key frames containing detected landmarks, and the locations of the detected landmarks based on the detection result. In the geolocation files, the timestamps respectively correspond to the locations. Similarly, the geolocation file may be generated in GPX format. In some cases, the same landmark may appear in different key frames, and hence multiple timestamps may correspond to the same location.

Referring to Figure 2, in step S22, the processor 12 scans through all the multimedia files stored in the memory unit 13 to find any file from among the multimedia files that has metadata corresponding to the geolocation file related to the main video, and regards each file thus found as a matched file. Specifically, the metadata of a matched file records a location that matches one of the locations recorded in the geolocation file (referred to as a matched location hereinafter). It is noted that the location recorded by the metadata indicates a location where the matched file was generated. Specifically, a matched file may be a personal image or a personal video, and the location recorded by the metadata may indicate a location where the personal image (or the personal video) was captured (or recorded). The number of the matched file(s) may be singular or plural; that is to say, in some cases, multiple matched files may be determined in this step and each of them corresponds to one of the locations (i.e., a corresponding matched location) recorded in the geolocation file. Moreover, two locations being determined to match does not necessarily mean that the sets of longitude and latitude coordinates of the two locations are exactly identical, and the processor 12 may determine a multimedia file as a matched file when it is determined that the metadata of the multimedia file records a location that is within a specific distance (e.g., 100 meters) from one of the locations recorded in the geolocation file. In some cases, a single matched file may correspond to multiple matched locations that are in fact the same location but correspond to different timestamps in the geolocation file.

In some cases, the metadata of some of the multimedia files may not record location(s) where the personal images or the personal videos were captured or recorded. Therefore, before scanning through all the multimedia files, for those multimedia files not having any geolocation information, the processor 12 performs the landmark detection process mentioned above, and records the location(s) thus detected in the metadata of those multimedia files. It is noted that since a personal image does not include multiple frames, step S31 related to key frame extraction is omitted, and the processor 12 directly detects a landmark in the personal image as explained in step S32 to obtain the location of the landmark. In this case, the location recorded by the metadata of a personal image indicates a location of a landmark that is detected in the personal image, and location(s) recorded by the metadata of a personal video indicates location(s) of landmark(s) detected in key frames of the personal video.

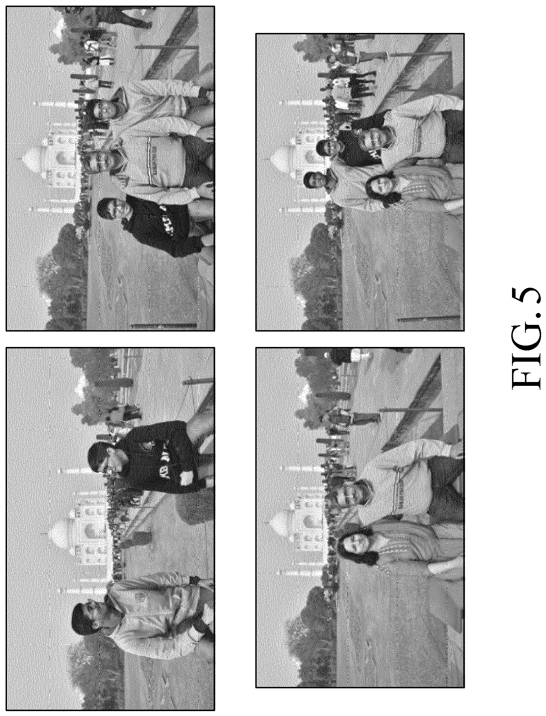

Referring to Figure 5, four personal images having Taj Mahal as a landmark in the background are exemplarily illustrated, and are determined by the processor 12 as matched files that have metadata corresponding to the geolocation file related to the main video. That is to say, the metadata of the four personal images record the location of Taj Mahal that matches one of the locations (i.e., a matched location) recorded in the geolocation file.

In step S23, the processor 12 associates the matched file(s) with the main video by generating an association file for the main video. For each matched file, the association file records a bookmark entry that indicates a file path to the matched file and the timestamp which corresponds to the corresponding matched location in the geolocation file (e.g., a time point when the corresponding matched landmark appears in the main video). It is noted that the timestamp recorded in a bookmark entry of the association file corresponds to one of the key frames of the main video that is related to the corresponding matched location, for example, the one of the key frames that contains the same landmark as the matched file, or that was captured at the same location as the matched file. In a case where multiple matched files are found, the association file records multiple bookmark entries each indicating a file path to a respective one of the matched files and the timestamp which corresponds to a corresponding matched location. In the cases where the matched file corresponds to multiple timestamps (i.e., the location to which the matched file matches appears multiple times in the geolocation file), multiple bookmark entries will be recorded, each corresponding to a different timestamp.

In some embodiments, the file path represents a storage location of the matched file in a directory structure when the matched file is stored locally, e.g., stored in the same computer as the main video. In some embodiments, the file path represents a Uniform Resource Identifier (URI) of the matched file when the matched file is stored in a remote server and is accessible via the Internet. In some embodiments, the association file is a companion file of the main video, is stored in a same directory with the main video, and has a same file name as the main video but a different file extension from the main video. For example, the association file may be generated as a subtitle file of the main video, and has a file extension ".srt;" and the bookmark entry is recorded in a form of text strings in the association file. It is noted that the association file is not limited to being stored locally with the main video. For example, in other embodiments, the association file may be stored in a remote server, and an URI of the association file may be recorded in the metadata of the main video. In this way, the association file may be accessible via the Internet based on the URI recorded in the metadata of the main video.

Accordingly, after the association file is generated for the main video, when the main video is being played on the display unit 11, the matched file(s) can be displayed respectively when the main video is being played to the point(s) where the matched location(s) or the landmark(s) appears in the main video. Specifically, in step S24, the processor 12, in response to receipt of a user instruction for playing the main video from the input unit 14, plays the main video on the display unit 11, and as the main video is being played, whenever playback of the main video is at a time of the timestamp which is indicated by one bookmark entry recorded in the association file, displays a thumbnail of the corresponding matched file on the display unit 11.

Specifically, in some embodiments, based on the association file, the processor 12 displays, for each bookmark entry recorded in the association file, a bookmark indicator that corresponds to the bookmark entry on a video progress bar of the main video. The bookmark indicator is located at a position of the video progress bar that corresponds to the timestamp indicated by the bookmark entry. In other words, the main video can be "embedded with" bookmark indicator(s) on the video progress bar. In some embodiments, each bookmark indicator may be implemented by a symbol (e.g., a triangle) that is clickable or selectable by user operation. Moreover, for each bookmark entry recorded in the association file, the processor 12 accesses the respective matched file based on the file path indicated by the bookmark entry, and generates a thumbnail of the respective matched file. It is noted when multiple bookmark entries have the same timestamp, the corresponding multiple bookmark indicators can be combined as one bookmark entry and displayed on the video progress bar.

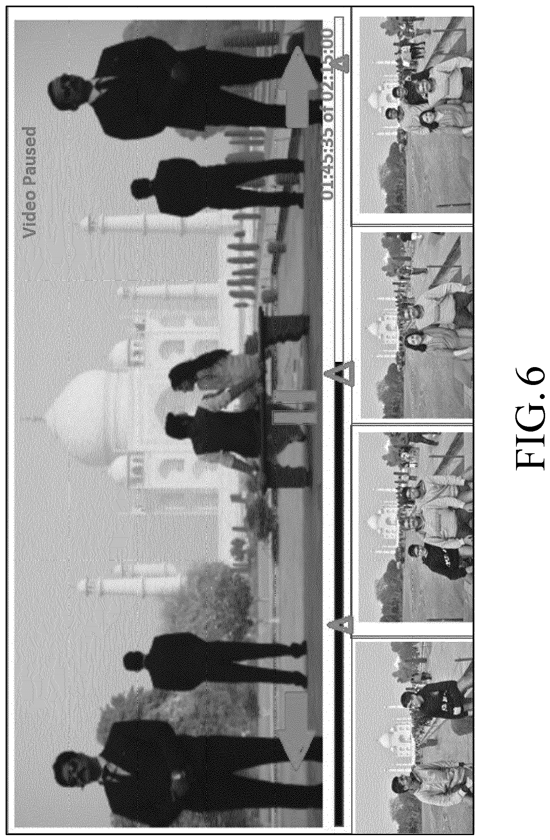

When a bookmark indicator is selected, the main video jumps to a time of the timestamp corresponding to the bookmark indicator and pauses at that time, and the processor 12 displays the thumbnail of the corresponding matched file on the display unit 11. It is noted that at this moment, the main video would present a landmark or a scene at the corresponding matched location which is the same as that represented in the thumbnail of the matched file. Referring to Figure 6, the main video jumps to and pauses at a scene where Taj Mahal is shown in the background when the middle one of the bookmark indicators is selected, and thumbnails of four personal images (i.e., four matched files) having the same landmark, Taj Mahal, in the background are shown below the main video. It is noted that, a user may navigate through the bookmark indicators by selecting the arrowhead symbols to view other matched files corresponding to different locations in the main video.

Moreover, when a thumbnail is selected by user operation, the processor 12 displays the corresponding matched file on the display unit 11, that is, the personal image or the personal video having a location matching the location appearing in the main video will be displayed or played. In some embodiments, the matched file being displayed may be overlaid on the main video in a manner of picture-in-picture (PIP), or may be presented alongside the main video in a manner of split screen. In response to receipt of a user instruction for closing the matched file, the processor 12 exits displaying or playing of the matched file and resumes playback of the main video. In other words, the user can switch to displaying or showing the matched file from the main video by selecting the thumbnail, and switch back to playing the main video after viewing the matched file.

In some embodiments, when the main video is played to the time of the timestamp which is indicated by a bookmark entry recorded in the association file (for example, when a current progress of the main video reaches a bookmark indicator on the video progress bar), the main video keeps on playing while the thumbnail of the corresponding matched file is shown beside the main video for user selection. In this way, the user's viewing experience would not be interrupted, and an option of switching to viewing the matched file is provided.

In some embodiments, when multiple matched files are determined by the processor 12 so that the association file records multiple bookmark entries, multiple bookmark indicators may be shown on the video progress bar if the bookmark entries indicate two or more different timestamps, and multiple thumbnails would be displayed at the same time if two or more of the bookmark entries indicate the same timestamp (i.e., the example shown in Figure 6).

It is noted that the main video embedded with the bookmark indicator(s) on the video progress bar can be shared with other users, such as friends or relatives, by transmitting the main video, the association file and the matched file to electronic devices of the other users. In some embodiments, when the URI of the association file is recorded in the metadata of the main video and the URI of each matched file is recorded in the association file, only the main video or an URI of the main video is transmitted to the electronic devices of the other users, while the association file and the matched file(s) can be accessed via a network, e.g., the Internet, based on their respective URIs.

In some embodiments, the association file may be edited by using a subtitle editing software application, such as SubRip, to manually add a bookmark entry to the associate file or delete a bookmark entry from the associate file. In this way, any multimedia file may be made to serve as a matched file and made to be associated with the main video. For example, an application of the method may be extended to educational videos (e.g., videos related to geography or history lessons) where bookmark entries may be edited to indicate other videos, images, or even Portable Document Format (PDF) documents as supplementary teaching materials to make online teaching more involving and engaging to students.

In some embodiments, the idea of the method may be further extended to content aggregation based on landmark detection. The processor 12 scans through all the multimedia files to find associated files that have the same or similar locations recorded in the metadata, and generates a playlist indicating file paths of these associated files. In this way, the user may play through all video clips and image slide show that have a matching landmark. It is noted that a higher level of content aggregation may be achieved by changing the criterion for location matching. For example, multimedia files related to the Louvre Museum may be recommended for playback when multimedia files related to the Eiffel Tower is being played since both landmarks are located in the same city of Paris.

To sum up, by detecting landmarks in the main video and the multimedia files, locations related to scenes appearing in the main video and the multimedia files can be determined. By comparing the locations of the main video and the multimedia files to find a matched file from among the multimedia files, an association file may be generated for the main video where a bookmark entry that indicates a file path to the matched file and the timestamp which corresponds to the corresponding matched location is recorded in the association file. Accordingly, during playback of the main video, a thumbnail of the matched file is shown for user selection when the matched location appears in the main video. Further, playback of the main video may be switched to display or playback of the matched file when the thumbnail of the matched file is selected.

In this way, the electronic system 1 and the method of displaying multimedia content related to a location appearing in a video according to the disclosure at least have the following advantages.

Even if the metadata of the main video does not originally store any geolocation information related to a location where the main video was recorded, a location of a landmark appearing in the main video could still be determined through the landmark detection process, and this location can be recorded in the metadata of the main video.

The personal images and the personal videos that have a common location can be grouped together by the electronic system 1, which saves labor of manually sorting the multimedia files by location.

When a landmark is shown in the main video, a user can switch from playback of the main video to display or playback of the matched file(s) that show the same landmark, so that the user can travel back in time and relive pleasant memories.

The main video embedded with the bookmark indicator(s) on the video progress bar can be shared with friends or relatives, so as to share memories with them.

In the description above, for the purposes of explanation, numerous specific details have been set forth in order to provide a thorough understanding of the embodiment(s). It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects; such does not mean that every one of these features needs to be practiced with the presence of all the other features. In other words, in any described embodiment, when implementation of one or more features or specific details does not affect implementation of another one or more features or specific details, said one or more features may be singled out and practiced alone without said another one or more features or specific details. It should be further noted that one or more features or specific details from one embodiment may be practiced together with one or more features or specific details from another embodiment, where appropriate, in the practice of the disclosure.

## Claims

1. A method of displaying multimedia content related to a location appearing in a video, the method to be implemented by an electronic system (1) that includes a display unit (11), a processor (12), and a memory unit (13) storing a main video to be played on the display unit (11) and a plurality of multimedia files, the method **characterized by**:
by the processor (12), generating, based on the main video, a geolocation file that records timestamps and locations related to the main video and respectively corresponding to the timestamps;
by the processor (12), scanning through the plurality of multimedia files to find one file from among the plurality of multimedia files that has metadata corresponding to one of the locations in the geolocation file, and makes the file serve as a matched file;
by the processor (12), associating the matched file with the main video by generating an association file for the main video, the association file recording a bookmark entry that indicates a file path to the matched file and one of the timestamps which corresponds to said one of the locations in the geolocation file;
by the processor (12), playing the main video on the display unit (11), displaying a thumbnail of the matched file on the display unit (11) when the main video is at a time of the one of the timestamps, and displaying the matched file on the display unit (11) when the thumbnail is selected.

2. The method as claimed in claim 1, wherein in scanning through the plurality of multimedia files to find the one file, the metadata of the matched file records a location that matches said one of the locations recorded in the geolocation file.

3. The method as claimed in claim 2, wherein the location recorded in the metadata of the matched file indicates a location where the matched file was generated.

4. The method as claimed in claim 2, wherein the location recorded in the metadata of the matched file indicates a location of a landmark that is detected in the matched file.

5. The method as claimed in any of claims 2 to 4, wherein the location recorded in the metadata of the matched file is within a specific distance from the one of the locations recorded in the geolocation file.

6. The method as claimed in any of claims 1 to 5, the main video including different video parts, metadata of the main video storing plural pieces of geolocation information each corresponding to a respective one of the different video parts, and each indicating a timestamp of the video part in the main video and a location where the video part was recorded;
wherein in generating a geolocation file that records timestamps and locations, the geolocation file records the timestamps and the locations indicated by the plural pieces of geolocation information.

7. The method as claimed in any of claims 1 to 6, prior to generating a geolocation file, further comprising:
by the processor (12), determining landmarks appearing in the main video by performing a landmark detection process on the main video in order to determine the locations related to the main video.

8. The method as claimed in claim 7, the main video including a sequence of video frames that respectively correspond to different timestamps and that are composed of I-frames, P-frames and B-frames, wherein performing a landmark detection process includes:
extracting the I-frames from the main video and making at least a part of the I-frames thus extracted serve as key frames for the main video; and
with respect to each of the key frames, detecting a landmark in the key frame to obtain a detection result that indicates a location of the landmark represented in a set of longitude and latitude coordinates.

9. The method as claimed in claim 8, wherein in making at least a part of the I-frames thus extracted serve as key frames, the processor (12) selects scene-changing frames from among the I-frames using a scene filter, and makes the scene-changing frames thus selected serve as the key frames.

10. The method as claimed in one of claims 8 and 9, wherein in generating a geolocation file that records timestamps and locations, the timestamps of the key frames and the locations of the landmarks thus detected in the key frames are recorded in the geolocation file.

11. The method as claimed in any of claims 1 to 10, wherein in associating the matched file with the main video, the file path indicated by the bookmark entry recorded in the association file represents a Uniform Resource Identifier, URI, of the matched file.

12. The method as claimed in any of claims 1 to 11, wherein in associating the matched file with the main video, the association file is a companion file of the main video, is stored in a same directory as the main video, and has a same file name as the main video but a different file extension from the main video.

13. The method as claimed in claim 12, wherein the association file is generated as a subtitle file of the main video, and the bookmark entry is recorded in a form of text strings in the association file.

14. The method as claimed in any of claims 1 to 13, further comprising:
based on the association file, displaying a bookmark indicator on a video progress bar of the main video, the bookmark indicator corresponding to the bookmark entry recorded in the association file and being located at a position of the video progress bar that corresponds to the timestamp indicated by the bookmark entry.

15. The method as claimed in any of claims 1 to 14, prior to displaying a thumbnail of the matched file, further comprising:
by the processor (12), accessing the matched file based on the file path indicated by the bookmark entry recorded in the association file, and generating the thumbnail of the matched file.
